**Europäisches Patentamt**

**European Patent Office**

**Office européen des brevets**

(19)

(11) Numéro de publication : **0 313 423 B1**

# (12) FASCICULE DE BREVET EUROPEEN

(45) Date de publication du fascicule du brevet :
**26.02.92 Bulletin 92/09**

(51) Int. Cl.⁵ : **F16B 4/00,** // F16B37/12, F16B19/00, F16D55/22

(21) Numéro de dépôt : **88402399.5**

(22) Date de dépôt : **23.09.88**

(54) **Elément tubulaire en matériau à mémoire de forme utilisé comme élément d'assemblage mécanique démontable.**

(30) Priorité : **23.09.87 FR 8713126**

(43) Date de publication de la demande :
**26.04.89 Bulletin 89/17**

(45) Mention de la délivrance du brevet :
**26.02.92 Bulletin 92/09**

(84) Etats contractants désignés :
**BE CH DE ES GB GR IT LI LU NL SE**

(56) Documents cités :
**EP-A- 0 161 952**
**FR-A- 2 306 782**
**FR-A- 2 306 785**
**MATERIALS ENGINEERING, octobre 1969, pages 28-31; H.J. WAGNER et al.: "What you can do with that 'memory' alloy"**

(73) Titulaire : **SOURIAU ET CIE**
**145, rue Yves-Le-Coz**
**F-78035 VERSAILLES CEDEX (FR)**

(72) Inventeur : **de Mendez, Michel**
**La Saulsaie 7 Voie de l'Etoile du Mesnil**
**F-91310 Montlhery (FR)**
Inventeur : **Humbert, Stéphane**
**255 Boulevard Jean Jaurès**
**F-92100 Boulogne (FR)**
Inventeur : **Rizzo, Gilles**
**27, rue Pierron**
**F-94000 Créteil (FR)**

(74) Mandataire : **Martin, Jean-Jacques et al**
**Cabinet REGIMBEAU 26, Avenue Kléber**
**F-75116 Paris (FR)**

EP 0 313 423 B1

Jouve, 18, rue Saint-Denis, 75001 PARIS

## Description

La présente invention concerne un élément d'assemblage démontable pour assemblage mécanique.

Actuellement, afin d'assurer l'assemblage de pièces mécaniques telles que les pièces de bois, de matériaux plastiques surmoulés, les matériaux composites et les fontes d'aluminium, on utilise avantageusement des éléments métalliques lesquels sont soit collés, visses à force dans un logement ménagé dans les matériaux tels que le bois, ou surmoulés dans des matériaux tels que les matériaux plastiques. Ces pièces peuvent assurer des fonctions aussi diverses que celles d'insert mécanique d'assemblage par vissage, par coincement dans le cas de tirants, d'élément de palier support pour axe traversant ou analogues, ou de chevilles de fixation dans des parois.

Si l'ensemble de ces éléments donne satisfaction, dans la plupart des cas, ces derniers sont montés à demeure et ne peuvent facilement être démontés sauf à sacrifier le plus souvent l'élément assemblé ou une partie de celui-ci.

Cela s'applique également pour l'élément d'assemblage selon le document FR-A-2.306782, formé d'un élément tubulaire en matériau à mémoire de forme, étant susceptible d'occuper à une température inférieure à une température de transition Af une forme (I) ou état réstreint mémorisé permettant l'insertion ou le retrait dudit élément d'un logement de montage et à la température ambiante, supérieures à la température de transition précitée une forme (II) ou état expansé mémorisé assurant le blocage dudit élément dans ledit logement.

La présente invention a au contraire pour objet, la mise en oeuvre d'un élément d'assemblage pour assemblage mécanique totalement démontable.

Un autre objet de la présente invention est la mise en oeuvre d'un élément d'assemblage démontable pouvant assurer les fonctions les plus diverses présentant donc une très grande souplesse d'utilisation tant dans l'environnement domestique que dans l'environnement industriel.

L'élément d'assemblage démontable pour assemblage mécanique objet de l'invention est remarquable en ce qu'il est formé d'un élément tubulaire en matériau à mémoire de forme. L'élément est susceptible d'occuper à une température inférieure à la température de transition Af de fin de transformation austénitique une forme ou état rétreint mémorisé permettant l'insertion ou le retrait dudit élément d'un logement de montage, et, à la température ambiante, supérieure à la température de transition précitée, une forme ou état expansé mémorisé assurant le blocage de l'élément dans le logement. Le passage de l'un à l'autre état ou forme mémorisé est obtenu par la seule variation de la température de l'élément en deçà ou au delà de la température de transition Af.

De tels éléments d'assemblage trouvent une très large application dans des domaines aussi variés que la menuiserie industrielle, la mécanique automobile, l'industrie des matières plastiques, l'outillage et les pièces détachées pour le bricolage en général.

L'invention sera mieux comprise à la lecture de la description et à l'observation des dessins ci-après dans lesquels :

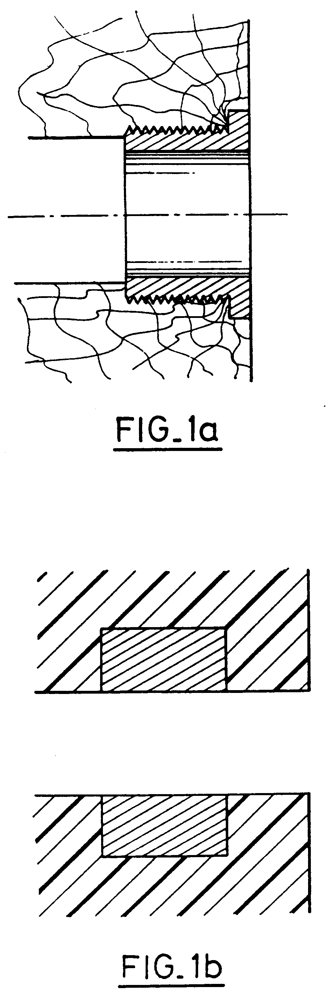

– la figure 1a et la figure 1b représentent, en coupe selon un plan diamétral, une vue d'un élément d'assemblage formant respectivement insert dans un matériau tel que le bois et dans un matériau tel qu'un matériau plastique, selon l'art antérieur,

– la figure 2a représente en coupe selon un plan diamétral et en vue de face un premier mode de réalisation d'un élément d'assemblage conforme à la présente invention.

– la figure 2b représente en coupe selon un plan diamétral et en vue de face un deuxième mode de réalisation d'un élément d'assemblage selon l'invention,

– la figure 2c représente en coupe selon un plan diamétral et en vue de face un mode de montage particulier tel que représenté en figure 2a, de l'élément selon l'invention,

– la figure 2d représente en coupe selon un plan diamétral et en vue de face un mode de montage particulier tel que représenté en figure 2b, de l'élément selon l'invention,

– la figure 3a représente un mode de réalisation avantageux d'un élément d'assemblage objet de l'invention constituant une goupille et la figure 3b représente une application de l'élément représenté en figure 3a et en particulier au montage de plaquettes de freins,

– la figure 4a représente un mode de réalisation d'un élément d'assemblage selon l'invention dans le cas où celui-ci constitue un rivet et la figure 4b représente le même élément en position de rivetage.

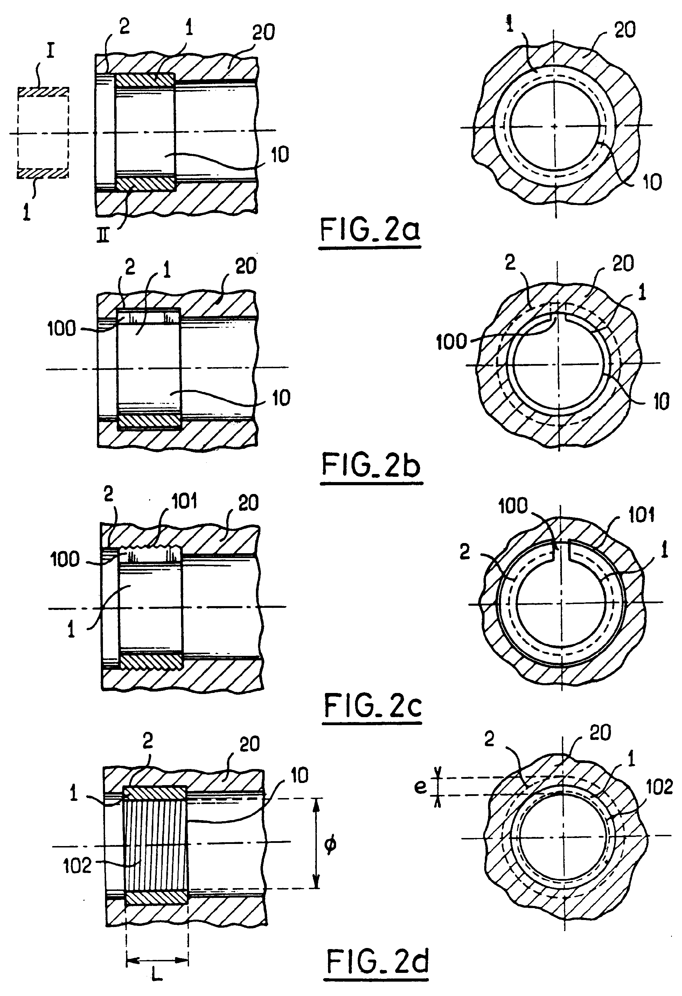

L'élément d'assemblage démontable pour assemblage mécanique objet de l'invention sera tout d'abord décrit en liaison avec la figure 2a.

Conformément à la figure précitée, l'élément d'assemblage démontable pour assemblage mécanique objet de l'invention est formé d'un élément tubulaire 1 en matériau à mémoire de forme. L'élément tubulaire 1 est susceptible d'occuper à une température inférieure à la température de fin de transformation austénitique notée Af, ou température de transition Af du matériau constitutif de l'élément une forme ou état rétreint mémorisé, état mémorisé noté I sur la figure 2a, permettant l'insertion ou le retrait de l'élément d'un logement 2 de montage ménagé dans l'une des pièces à assembler. Sur la figure 2a, l'état rétreint mémorisé est représenté en pointillé.

En outre, à la température ambiante, c'est-à-dire à une température supérieure à la température de transition Af précitée, l'élément tubulaire est susceptible d'occuper une forme ou état expansé mémorisé noté II sur la figure 2a. Cet état expansé mémorisé assure le blocage de l'élément 1 dans le logement 2.

Conformément à un aspect particulièrement avantageux de l'élément d'assemblage objet de l'invention, le passage de l'un à l'autre état ou forme mémorisé I ou II et réciproquement est obtenu par seule variation de la température de l'élément I en deçà ou au delà de la température de transition Af. Bien entendu, sur la figure 2a et sur toutes les figures successives, les rapports de variation de dimension entre l'état rétreint I et l'état expansé II n'ont pas été respectés, afin d'assurer une meilleure compréhension de l'élément d'assemblage objet de l'invention.

Afin d'assurer le passage de l'un à l'autre état ou forme mémorisé I ou II, par seule variation de la température de l'élément I en deçà ou au delà de la température de fin de transition austénitique Af, l'élément 1 peut avantageusement être soumis à un processus d'éducation tel que décrit dans le document EP-A 0 161 952 publiée le 21 novembre 1985 au nom de la Demanderesse et dans lequel est décrit un élément de contact électrique basé sur le même principe que le présent brevet.

Ce processus d'éducation est remarquable en ce qu'il permet une véritable éducation de l'élément d'assemblage démontable, celui-ci pouvant alors être éduqué de façon que les états rétreint mémorisé I et expansé II permettent une adaptation à tout type de logement 2, ces logements pouvant être réalisés sur des substrats ou pièces à assembler notées 20, de nature et de composition différente.

Conformément à un aspect particulièrement avantageux de l'objet de l'invention, l'élément d'assemblage tel que représenté en figure 2a peut être un élément tubulaire de section cylindrique.

En vue de constituer un palier mécanique permettant l'engagement d'un axe traversant, tel qu'un axe de rotation par exemple, la face interne de l'élément tubulaire peut avantageusement être constituée par une surface lisse. La surface interne notée 10 de l'élément tubulaire 1 peut alors avantageusement être usinée et rectifiée de façon à présenter un degré de poli suffisant pour assurer la fonction de palier mécanique.

Selon un mode de réalisation particulièrement avantageux de l'élément d'assemblage démontable pour assemblage mécanique objet de l'invention, tel que représenté en figure 2b, l'élément tubulaire 1 est fendu le long d'une de ses lignes génératrices. Sur la figure 2b, on a représenté sur la partie gauche de cette figure, l'élément tubulaire 1, selon une vue en coupe selon un plan diamétral de symétrie, la fente le long de la génératrice de l'élément tubulaire 1 étant notée 100. Bien entendu, l'élément tubulaire fendu représenté en figure 2b, permet d'obtenir des états de forme mémorisés I et II dont la variation de dimension radiale est sensiblement plus importante que dans le cas d'un élément tubulaire 1 non fendu. Ainsi qu'on l'a représenté en outre en figure 2b, le logement 2 peut être réalisé de façon non limitative, par une cavité en surévidement par rapport à une cavité centrale correspondant aux dimensions du premier état de forme mémorisé I.

Ainsi qu'on l'a représenté en outre en figure 2c, selon un mode de montage particulier d'un élément d'assemblage démontable objet de l'invention, tel que représenté en figure 2a, dans lequel la dimension du logement 2 est sensiblement égale à la dimension correspondante de l'état de forme mémorisé expansé II, la paroi externe de l'élément tubulaire 1 est striée, les stries étant notées 101, de façon, à l'état expansé de l'élément 1, à provoquer un enfoncement des parties en saillie 101 des stries dans le matériau 20 environnant dans lequel le logement 2 est effectué.

En outre, et de façon à réaliser un insert du genre cheville, la face interne 10 de l'élément tubulaire 1 peut en outre être filetée de façon à permettre un assemblage par vis métal. Sur la figure 2d, on a ainsi repsérenté l'élément tubulaire 1 muni sur sa face interne 10 d'un filetage 102, l'élément d'assemblage tel que représenté en figure 2d, correspondant à un mode de montage, tel que déjà représenté en figure 2b, mais l'élément tubulaire 1 correspondant sensiblement à l'élément tubulaire 1 représenté en figure 2a, c'est-à-dire en l'absence de fente 100. Ce mode de réalisation n'est pas limitatif, l'élément 1 bien que fileté sur sa face interne pouvant également comporter une fente longitudinale 100 selon une de ses génératrices.

Dans le cas où l'élément tubulaire 1 est destiné à réaliser un insert du genre cheville, l'élément 1 peut présenter une longueur L comprise entre 5 mm et 40 mm, un diamètre interne $\phi$ compris entre 5 mm et 15 mm, et une épaisseur $\underline{e}$ comprise entre 0,5 mm et 3 mm.

Bien entendu, l'élément tubulaire destiné à former un insert du genre cheville peut avantageusement être utilisé pour l'assemblage de pièces en tout type de matériau, telles que des pièces de menuiserie, ou au contraire, des pièces en matière plastique, l'élément tubulaire 1 formant insert étant dans les deux cas monté à froid dans un logement à paroi lisse et le retour à la température ambiante permettant le blocage de l'élément d'assemblage contre les parois du logement précité.

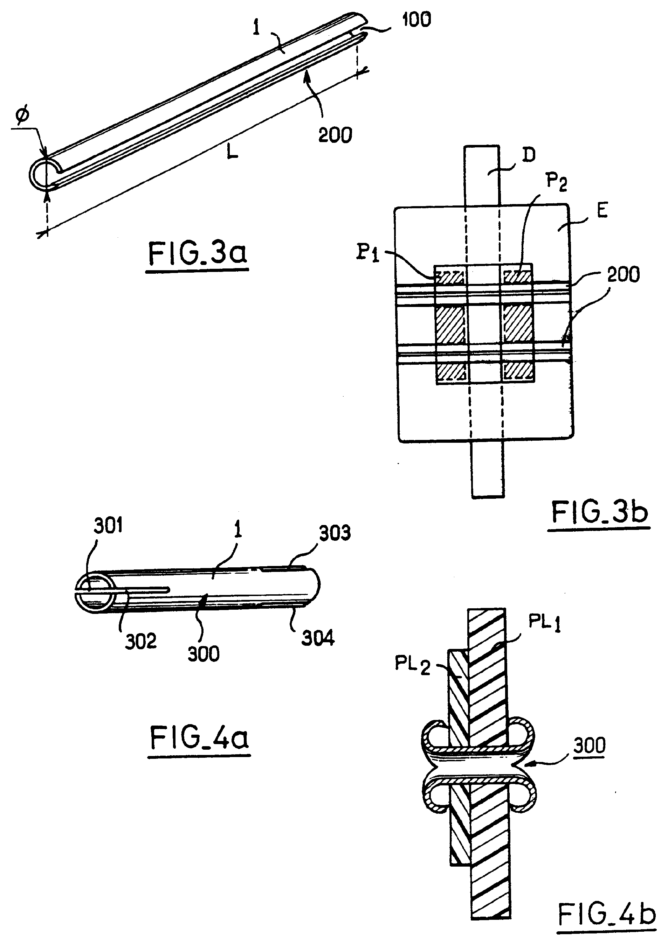

Un autre mode de réalisation non limitatif de l'élément d'assemblage démontable objet de l'invention, sera maintenant décrit en liaison avec les figures 3a et 3b.

Selon la figure 3a, l'élément d'assemblage 1 en vue de constituer une goupille 200, présente un rapport $\rho$ de la longueur L sur le diamètre interne $\phi$

compris entre 5 et 10 en fonction des applications. Sur la figure 3a, on a représenté l'élément tubulaire 1 comme un élément tubulaire fendu, mais celui-ci peut de manière avantageuse non limitative être constitué par un élément tubulaire non fendu.

Une utilisation particulièrement avantageuse de la goupille 200 représentée en figure 3a est représentée également en figure 3b.

Sur la figure 3b, la goupille 200 peut avantageusement être utilisée dans le domaine de la construction automobile pour le montage des plaquettes de frein P1 et P2, ou garnitures de friction, sur le disque D, les plaquettes P1 et P2 étant montées par l'intermédiaire de goupilles 200 sur l'étrier porte-garnitures noté E. Les goupilles 200 sont alors amenées à une température inférieure à la température de transition Af, soit dans leur état rétreint, et les plaquettes P1 et P2 sont installées sur l'étrier E par l'intermédiaire des goupilles dans l'état de forme rétreint mémorisé. Le retour à la température ambiante a pour effet de provoquer le blocage des goupilles dans les orifices de montage ménagés dans l'étrier et dans les plaquettes P1 et P2, le montage de ces dernières étant ainsi assuré. Bien entendu, l'échauffement de l'ensemble de la tête de freinage, c'est-à-dire des plaquettes P1, P2 et de l'étrier E au cours du frottement sur le disque en cours de fonctionnement, ne modifie en aucun cas la cohésion du montage de l'ensemble.

Un autre mode de réalisation particulièrement avantageux de l'élément d'assemblage objet de l'invention sera décrit en liaison avec les figures 4a et 4b.

Dans le mode de réalisation correspondant aux figures 4a et 4b précitées, celui-ci correspond à un élément d'assemblage du genre rivet.

Ainsi que représenté en figure 4a, l'élément tubulaire 1 du genre rivet étant représenté dans son état de forme mémorisé rétreint, l'élément 1 constituant rivet 300 est partiellement fendu sur au moins deux génératrices diamétralement opposées, les fentes étant notées 301, 302, 303, 304, ces fentes partielles étant ménagées à au moins l'une des extrémités de l'élément tubulaire 1. Il est bien entendu en effet que l'élément du genre rivet objet de l'invention peut comporter au moins une extrémité munie de fente partielle 301, 302, les lobes d'extrémité de l'élément tubulaire 1, ainsi formés, étant soumis à un processus d'éducation tel que précédemment mentionné dans la description. L'autre extrémité de l'élément tubulaire 1 formant rivet 300 peut ou non être munie de fentes 303, 304, fentes partielles, ou au contraire d'une extrémité d'appui formée par emboutissage par exemple, cette extrémité n'étant pas alors soumise au processus d'éducation, mais servant uniquement d'appui conformément aux rivets de type classique.

Dans le cas où les deux extrémités sont munies de fentes 301, 302, 303, 304, celles-ci, deux fentes 301, 302 et 303, 304 étant ménagées à chaque extrémité, peuvent être orientées de façon à former des plans diamétraux orthogonaux. Bien entendu, chaque extrémité de l'élément tubulaire 1 formant rivet 300 peut comporter plus de deux fentes, de façon à former un motif destiné à mieux répartir l'effort engendré par le retour de l'élément tubulaire 1 en matériau à mémoire de forme en son état austénitique lors de l'élévation de la température de celui-ci vers la température ambiante.

Sur la figure 4b, on a représenté en coupe, l'assemblage de deux plaques PL1, PL2, au moyen d'un rivet 300 tel représenté en figure 4a. L'assemblage des plaques PL1 et PL2, un orifice commun ayant été ménagé dans celles-ci, est réalisé à partir de l'élément tubulaire 1, tel que représenté en figure 4a dans son état rétreint, lequel est alors introduit dans l'orifice commun des plaques PL1 et PL2. Le retour à la température ambiante de l'élément tubulaire 1 formant rivet 300 permet alors l'enroulement des lobes d'extrémité déterminée 301, 302, 303, 304, pour former zone de pression sur les plaques PL1 et PL2, à la manière des rivets de type classique. Le nombre de lobes d'extrémité peut être choisi en fonction de l'application considérée.

Dans le but de réaliser des éléments d'assemblage d'applications domestiques, l'élément d'assemblage est constitué par un matériau de type alliage à mémoire de forme, présentant une température de transition Af, voisine de - 30°C.

Bien entendu, dans des applications de construction mécanique telle que l'automobile, où les éléments mécaniques correspondants sont susceptibles d'être soumis à des températures plus basses, la température de transition Af peut être encore plus basse et amenée à une température comprise entre - 50 et - 60°C.

Conformément à l'objet de l'invention, l'élément tubulaire 1 formant élément d'assemblage, est constitué en un matériau de composition binaire, nickel-titane, Ni-Ti, ou de composition ternaire, telle que cuivre-aluminium-nickel, Cu-Al-Ni, ou cuivre-zinc-aluminium, Cu-Zn-Al, ou des compositions à base d'acier ou acier inoxydable telles que fer, manganèse, carbone, Fe-Mn-C, ou fer-nickel-carbone, Fe-Ni-C, ou fer-nickel-titane, Fe-Ni-Ti, ou fer-aluminium-carbone, Fe-Al-C. L'ensemble de ces compositions est réalisé sous forme de liaison intermétallique ou sous forme alliée.

A titre d'exemple non limitatif une température de transition Af, de - 30°C, peut être atteinte à partir d'une composition ternaire de cuivre, de 68,9 % en masse, de zinc de 26,98 % en masse et d'aluminium de 4,12 % en masse. La température correspondante de début de transformation martensitique Ms, est alors voisine de -40°C. D'autres compositions peuvent bien entendu être utilisées. Le démontage des éléments de montage démontables objet de l'invention peut alors être réalisé à partir de source de froid de type industriel, telle que les bombes aérosols au gaz carbonique ou analogues, susceptible par exemple d'amener l'élément à une température inférieure à la température de fin de transition martensitique Mf.

On a ainsi décrit un élément d'assemblage démontable pour assemblage mécanique très performant en raison du fait que celui-ci, dans de nombreuses applications d'assemblage mécanique, peut être démonté sans aucune difficulté.

**Revendications**

1. Elément d'assemblage démontable pour assemblage mécanique, formé d'un élément tubulaire (1) en matériau à mémoire de forme, ledit élément étant susceptible d'occuper à une température inférieure à la température de transition Af une forme (I) ou état rétreint mémorisé permettant l'insertion ou le retrait dudit élément d'un logement (2) de montage, et, à la température ambiante, supérieure à la température de transition précitée, une forme (II) ou état expansé mémorisé assurant le blocage dudit élément dans ledit logement (2), caractérisé en ce que le passage de l'un à l'autre état ou forme mémorisé, et réciproquement, est obtenu par seule variation de la température dudit élément en deçà ou au-delà de la température de transition Af.

2. Elément selon la revendication 1, caractérisé en ce que ledit élément tubulaire (1) est de section cylindrique.

3. Elément selon la revendication 2, caractérisé en ce que, en vue de constituer un palier mécanique, la face interne (10) dudit élément est une surface lisse.

4. Elément selon l'une des revendications 1 ou 2, caractérisé en ce que ledit élément tubulaire (1) est fendu (100) le long de l'une de ses lignes génératrices.

5. Elément selon l'une des revendications 1 à 4, caractérisé en ce que la paroi externe de celui-ci est striée (101) de façon, à l'état expansé dudit élément, à provoquer un enfoncement des parties en saillie (101) desdites stries dans le matériau environnant dans lequel le logement (2) est effectué.

6. Elément selon l'une des revendications 1 à 2 ou 4 ou 5, caractérisé en ce que la face interne (10) dudit élément est filetée (102) de façon à permettre un assemblage par vis métal.

7. Elément selon l'une des revendications 1 à 4, caractérisé en ce que en vue de constituer une goupille (200) ledit élément (1) présente un rapport ρ de la longueur L sur diamètre interne φ compris entre cinq et dix.

8. Elément selon l'une des revendications 1 et 2 ou 4 à 6, caractérisé en ce que en vue de réaliser un insert du genre cheville, ledit élément présente une longueur L comprise entre 5 mm et 40 mm, un diamètre interne φ compris entre 5 mm et 15 mm et une épaisseur e comprise entre 0,5 mm et 3 mm.

9. Elément selon l'une des revendications 1 à 3, caractérisé en ce que ledit élément est partiellement fendu sur au moins deux génératrices diamétralement opposées à au moins l'une de ses extrémités.

10. Elément selon l'une des revendications 1 à 9, caractérisé en ce que ledit élément est constitué par un matériau du type alliage à mémoire de forme présentant une température de transition Af voisine de - 30°C.

11. Elément selon l'une des revendications 1 à 10, caractérisé en ce que ledit élément est constitué en un matériau de composition binaire Ni-Ti, ternaire Cu-Al-Ni, Cu-Zn-Al, ou Fe-Mn-C, Fe-Ni-C, Fe-Ni-Ti, Fe-Al-C sous forme de liaison intermétallique ou alliée.

**Patentansprüche**

1. Abnehmbares Montageelement zur mechanischen Montage, das aus einem röhrenförmigen Element (1) aus Formgedächtnis-Material besteht, wobei das Element geeignet ist, bei einer Temperatur unterhalb der Übergangstemperatur Af eine form (I) oder einen gespeicherten, eingeschnürten Zustand einzunehmen, der das Einsetzen oder das Zurückziehen des Elementes aus einem Montagesitz (2) ermöglicht, und bei der Umgebungstemperatur, die oberhalb der vorher genannten Übergangstemperatur liegt, eine Form (II) oder einen gespeicherten, ausgedehnten Zustand einzunehmen, der das Festsetzen des Elements in dem Sitz (2) garantiert, dadurch gekennzeichnet, daß der Übergang von dem einen zum anderen Zustand oder zur anderen gespeicherten form einzig durch eine Variation der Temperatur des Elementes diesseits oder jenseits der Übergangstemperatur Af erreicht wird.

2. Element nach Anspruch 1, dadurch gekennzeichnet, daß das röhrenförmige Element (1) einen zylindrischen Querschnitt besitzt.

3. Element nach Anspruch 2, dadurch gekennzeichnet, daß in Hinblick darauf, daß es ein mechanisches Lager darstellt, die innere Oberfläche (10) des Elementes eine glatte Oberfläche ist.

4. Element nach einem der Ansprüche 1 oder 2, dadurch gekennzeichnet, daß das röhrenförmige Element (1) entlang einer seiner erzeugenden Linien gespalten (100) ist.

5. Element nach einem der Ansprüche 1 bis 4, dadurch gekennzeichnet, daß die äußere Wand desselben im Zustand der Ausdehnung des Elements derart gerillt (101) ist, daß die vorstehenden Teile (101) der Rillen veranlaßt werden, in das umgebende Material, aus dem der Sitz (2) besteht, einzudringen.

6. Element nach einem der Ansprüche 1 bis 2, oder 4, oder 5, dadurch gekennzeichnet, daß die Innenfläche (10) des Elements derart mit einem Gewinde (102) versehen ist, daß eine Montage mit einer Metallschraube ermöglicht wird.

7. Element nach einem der Ansprüche 1 bis 4, dadurch gekennzeichnet, daß in Hinsicht darauf, daß es einen Bolzen (200) darstellt, das Element (1) ein Verhältnis . der Länge L zum inneren Durchmesser φ zwischen fünf und zehn aufweist.

8. Element nach einem der Ansprüche 1 und 2, oder 4 bis 6, dadurch gekennzeichnet, daß in Hinsicht darauf, daß es einen zapfenartigen Einsatz darstellt, das Element eine Länge L zwischen 5mm und 40mm, einen inneren Durchmesser φ zwischen 5mm und 15mm, und eine Dicke e zwischen 0,5mm und 3mm aufweist.

9. Element nach einem der Ansprüche 1 bis 3, dadurch gekennzeichnet, daß das Element teilweise auf wenigstens zwei diametral an wenigstens einem seiner Enden gegenüberliegenden Erzeugenden gespalten ist.

10. Element nach einem der Ansprüche 1 bis 9, dadurch gekennzeichnet, daß das Element aus einem Material des Typs einer Formgedächtnis-Legierung mit einer Übergangstemperatur Af in der Nähe von -30°C besteht.

11. Element nach einem der Ansprüche 1 bis 10, dadurch gekennzeichnet, daß das Element aus einem Material mit einer binären Zusammensetzung Si-Ti, einer ternären Zusammensetzung Cu-Al-Ni, Cu-Zn-Al oder aus Fe-Mn-C, Fe-Ni-C, Fe-Ni-Ti, Fe-Al-C in der form einer intermetallischen Verbindung oder einer Legierung besteht.

## Claims

1. A disassemblable member for mechanical assembly, formed by a tubular member (1) in a material with shape memory, the said member being able to take up a smaller remembered shape (I) or condition at a temperature below the transition temperature Af, so that it can be inserted or shrunk into a mount housing (2) and take up a remembered expanded shape (II) or condition at ambient temperature above the aforementioned transition temperature so that the said member is secured in the said housing (2), characterized in that the transition from one remembered condition or shape to the other, and vice versa, is achieved merely by altering the temperature of the said member above or below the transition temperature Af.

2. A member according to Claim 1, characterized in that the said tubular member (1) is of cylindrical cross-section.

3. A member according to Claim 2, characterized in that the inner face (10) of the said member is a smooth surface in order to form a mechanical bearing.

4. A member according to any one of Claims 1 or 2, characterized in that the said tubular member (1) has a slit (100) along one of its generatrices.

5. A member according to any one of Claims 1 to 4, characterized in that the outer wall thereof is ribbed (101) in such a way that when the said member is in the expanded condition the projecting portions (101) of the said ribs are embedded in the surrounding material in which the housing (2) is made.

6. A member according to one of Claims 1 to 2 or 4 or 5, characterized in that the inner face (10) of the said member is threaded (102) so as to permit assembly using a metal screw.

7. A member according to any one of Claims 1 to 4, characterized in that the said member (1) has a ratio ρ of its length L to its internal diameter φ between 5 and 10 in order to form a pin (200).

8. A member according to any one of Claims 1 and 2 or 4 to 6, characterized in that the said member has a length L between 5 mm and 40 mm, an internal diameter φ between 5 mm and 15 mm and a thickness e between 0.5 mm and 3 mm in order to form an insert of the dowel type.

9. A member according to any one of claims 1 to 3, characterized in that the said member is partially slit along at least two diametrically opposed generatrices at at least one of its extremities.

10. A member according to one of Claims 1 to 9, characterized in that the said member is formed from a material of the alloy type with shape memory having a transition temperature Af close to - 30°C.

11. A member according to one of Claims 1 to 10, characterized in that the said member is formed from a material having a binary Ni-Ti, ternary Cu-Al-Ni, Cu-Zn-Al or Fe-Mn-C, Fe-Ni-C, Fe-Ni-Ti, Fe-Al-C composition in the form of an intermetallic mixture or alloy.

FIG_1a

FIG_1b

FIG. 2a

FIG. 2b

FIG. 2c

FIG. 2d

FIG.3a

FIG.3b

FIG.4a

FIG.4b